# EUROPEAN PATENT APPLICATION

(11) **EP 4 265 542 A1**
(43) Date of publication of application: **25.10.2023**
(21) Application number: 22020337.6
(22) Date of filing: 14.07.2022
(51) Int. Cl.: B65G 1/04

(54) **STORAGE SYSTEM, TRUCK FOR STORAGE SYSTEM AND RACK CONSTRUCTION**

(30) Priority: 21.04.2022 CZ 20220164
(71) Applicant: RUR Robotics s.r.o., 170 00 Praha 7 (CZ)
(72) Inventor: SCHLIKSBIER, Petr, 181 00 Praha 8 (CZ)
(74) Representative: Cerych, Ondrej

(57) **Abstract**

The essence of the storage system lies in the fact that it is provided with at least one rack structure (6), which is provided with at least one vertical shaft (15), in which vertical toothed rack (25) or riser chains (32) are fixed, and at least one rack an aisle (11) in which the horizontal longitudinal rails (21) are fixed, as well as at least one truck (12) with a main bogie (1) for horizontal movement and a second bogie (2) with gears (24) for vertical movement of the truck (12). ). The essence of the truck for the storage system is that it is provided with a storage surface which is provided with at least one gripping mechanism, a main bogie (1) for horizontal movement of the truck and a second bogie (2) for vertical movement of the truck, where the second bogie (2) is provided with gears (24), the mutually independent bogies (1,2) being provided with a first drive (13) and a second drive (17), and the truck being equipped with control electronics (20), a power supply system and a communication module (31). The truck for the storage system can be provided with a second bogie (2) for lateral movement of the truck (12). The essence of the rack construction of the storage system lies in the fact that it consists of interconnected rack webs (34) and rack shelves (35), while in at least one vertical shaft (15) are fixed toothed racks (25) or riser chains (32), which pass through gaps (29) in horizontal longitudinal rails (21) which are accommodated in at least one rack aisle (11).

## Description

### Field of the invention

The invention falls within the field of the construction of storage systems, in particular automated storage systems, which serve to store handling units, which can be, for example, a crate or a carton. It also relates to the truck for the storage system and the rack construction itself. The storage system will be located mainly in closed spaces intended for logistics, storage and production and will provide logistics operations based on the requirements of the superior control system.

### State of the art

For this purpose, automatic rack storage systems of various sizes, constructions and handling capabilities with stored handling units are currently available.

Prior art storage systems allow in some cases the movement of trucks with goods in only one axis, where in each aisle and on each floor of the aisle there is one truck, which provides transport with handling units between the racking position and the transfer point, which is most often an entry into an elevator.

There are also automatic rack storage systems that allow movement in two axes, and several embodiments of these storage systems are known.

The movement in two axes can be ensured horizontally, i.e within one floor of the rack storage system, where the crossing between the aisles is realized. The truck is equipped with a second bogie, which it uses when moving on the rails for movement in the second axis, ie movement between the aisles or lateral movement of the truck with handling units.

However, another storage system, which also ensures movement in two axes, can be realized in two axes vertically, ie within one aisle, where a crossing takes place between the floors of one aisle. The vertical transfer of the trucks is ensured with using elevators. In these cases, the transport of goods between floors is always ensured by elevators. The trucks only allow horizontal movement in the x-axis in frame of the aisle, i.e. storage and retrieval of goods as with standard systems. Usually at the end of the aisle there is an elevator which, in addition to crates with goods, can also transport a truck so that they can be moved between particular floors and there is not a single truck on each floor, which is inefficient.

The input and output of these storage systems are controlled conveyors. If it is necessary to transport only one handling unit in the direction of movement in the aisle, it is necessary, for removal from the storage of the blocked handling unit. to first remove the blocking handling unit, i.e move it to another place and to a free position, so that it is necessary to have permanently a sufficient number of free positions. Only after removing the blocking handling unit can the required handling unit be removed from storage.

Another storage system also allows movement in two axes, but in this system each column of the racking system is equipped with technology for vertical movement and the reserved height racking levels, usually at the very bottom or at the very top, are destined for horizontal movement of the truck.

Transporting only one handling unit in the direction of movement in the aisle requires that the blocking handling unit first be moved to a free position in order to remove the blocked handling unit, so that this storage system also requires a constant need for permanently free positions. Only after the blocking handling unit has been moved can the required handling unit be removed from storage.

The change in the direction of movement of the truck is controlled by mechanical switches, which are located on the guide rail, and this requires high system service requirements and higher acquisition costs of the storage rack system.

The current state of the art also includes storage racking systems enabling movement in three basic axes. In each column of the racking system, there is technological equipment for vertical movement and horizontal movement in the aisle and out of the aisle takes place on the floor. Horizontal movement of these storage systems can only take place at one height level. This is the characteristic feature of this system and its main disadvantage is the speed, the limited number of trucks, which in the event of a larger number would block each other and the overall cost of this technical solution.

Most storage systems allow the transport of only one handling unit of predefined dimensions. It is often not possible to store two handling units at the depth of the rack in a row, which reduces the efficient use of storage space. The performance of the entire storage system is thus not used to the maximum extent possible. The reason is the savings in investment costs.

A significant disadvantage of existing storage systems is their high acquisition value in relation to their performance. This is mainly due to the fact that vertical transport is mostly provided by expensive elevators. In addition, existing storage systems require constant and costly maintenance, with failures usually affecting a substantial part of the storage system, and maintenance and repairs to restore operation are costly and long-term.

### Summary of the invention

The above drawbacks are eliminated and the technical object is achieved by the solution according to the invention, the essence of which is that the storage system is provided with at least one rack structure provided with at least one vertical shaft in which vertical toothed ridges or riser chains are fixed, and at least one rack aisle in which the horizontal longitudinal rails are fixed, and at least one truck with a main bogie for horizontal movement and a second bogie with gears for vertical movement of the truck

The rack structure can be provided on at least one side with transverse rails for the third bogie for the transverse horizontal movement of the truck. The transfer point is connected to the vertical shaft.

The truck for the storage system is provided with a storage surface provided with at least one gripping mechanism, a main bogie for horizontal movement of the truck and a second bogie for vertical movement of the truck, the second bogie being provided with gears, the mutually independent bogies being provided with a first drive and a second drive, and the truck is equipped with control electronics, power supply system and communication module.

The truck for the storage system can be provided with a third bogie for lateral movement of the truck.

At least one of the truck bogies can be equipped with a supply segment with a pressure device.

The gripping mechanism of the truck consists of at least one telescopic extension arm, which is provided with a gripping latch.

The main bogie of the truck consists of four axles, of which at least two are driven.

The storage surface of the truck is equipped with its own conveyor.

The second bogie of the truck is equipped with gears that fit into the toothed rack of the vertical rail or into the riser chain.

The rack structure of the storage system consists of interconnected rack webs and rack shelves, in which at least one vertical shaft are fixed gear racks or riser chains which pass through gaps in horizontal longitudinal rails which are accommodated in at least one rack aisle. Cross rails can be mounted on at least one side of the rack structure.

Parallel to the gear racks or riser chain can be in a vertical shaft and parallel to the horizontal longitudinal rails attached the supply rails in the aisles.

The shelves of the rack structure can be made corrugated to accommodate telescopic extension arms of the truck or they can be made of individual mandrels fixed in the rack construction.

Due to the parallelization of the transport by the trucks, i.e. the possibility of moving more trucks in the vertical shaft, the storage system according to the invention is not limited by the lift capacity, which causes a narrow neck at high outputs. The performance of the entire system is thus used to the maximum extent possible and can be easily changed by changing the number of trucks.

The storage system can be equipped with an adequate number of trucks so that the power of the individual trucks is used to the maximum extent possible and the system provides the required power. The number of trucks in the storage system can be changed over time, for example, according to seasonality or changing performance requirements of the storage system.

In the event of seasonal fluctuations or the sudden need to store or unload goods from a single aisle, trucks can be allocated to the required warehouse zone, which represents efficient and even use of individual trucks. Because each truck can move throughout the whole storage system, the concentration of trucks within the system can vary over time, so it is not necessary to have the goods evenly distributed throughout the warehouse in several places.

Depending on the type, the truck can transport one or more handling units without reducing the capacity of the storage system due to the wider aisle, as the handling units are transported one after the other, not side by side. This is mainly due to the relocation of handling units or goods for removal or storage either from or to the rear position. At the same time, the performance of the entire system is increased thanks to the greater transport capacity of the truck. Prior art storage systems previously had to leave a number of storage positions free so that when transferring with handling units located at the rear rack positions, they had room to store handling units that were located in front of those in the rear position and hindered transfer of handling units. in the back position.

The trucks in the storage system according to the invention can transport different dimensions of transport units or directly goods, which can be, for example, in cardboard packages.

The system is fully modular, so it can be adapted in both height and size for low and high racks, and can be installed in low spaces, even on mezzanine constructions.

The advantage of the storage systems according to the invention is their low acquisition value in relation to their performance. This is mainly due to the fact that vertical transport is not ensured by expensive lifts.

The storage system allows the trucks to move independently in all three axes and does not need elevators to move crates or trucks.

In addition, the storage system according to the invention does not require constant and expensive maintenance, as it is considerably simpler than the prior art. The racks and the rail system do not fail, in particular because they do not contain any moving elements. All operations are performed only by trucks, the maintenance of which is performed outside the system. In the event of faults, only the local part of the storage system is usually affected and repairs aimed at resuming operation are usually simple and quick.

### Clarification of drawings

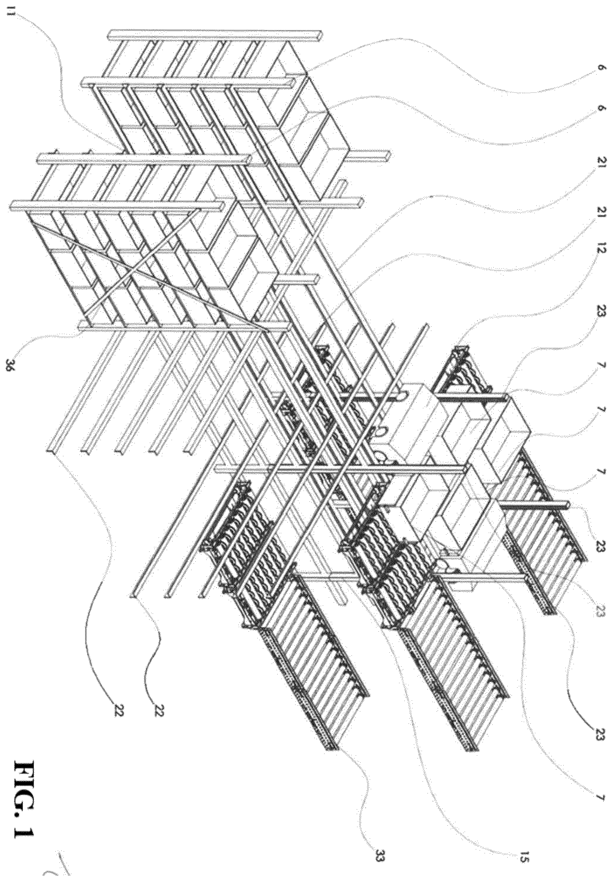

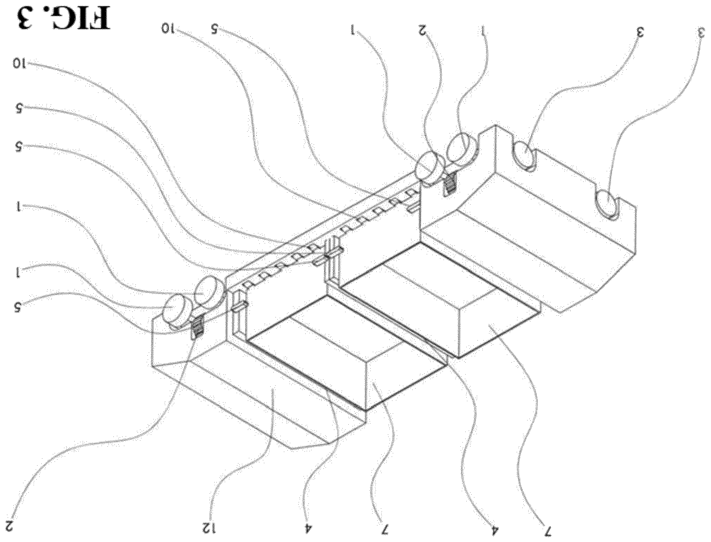

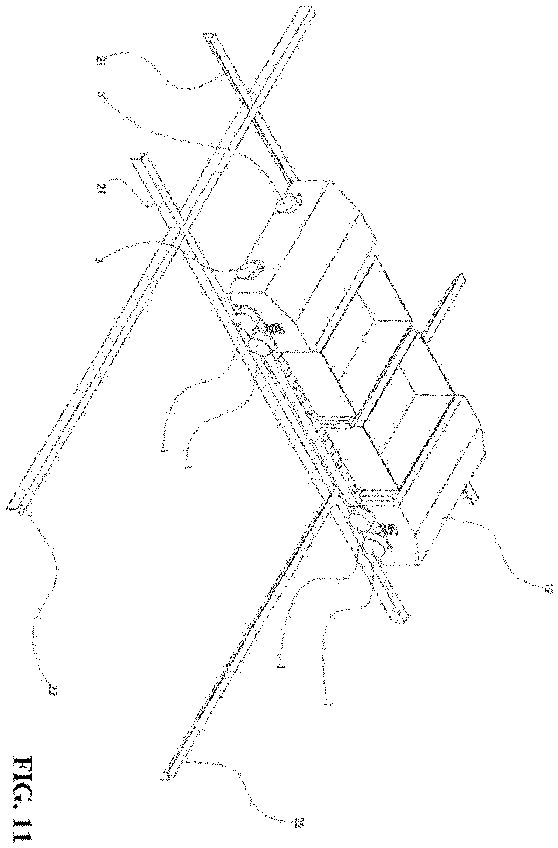

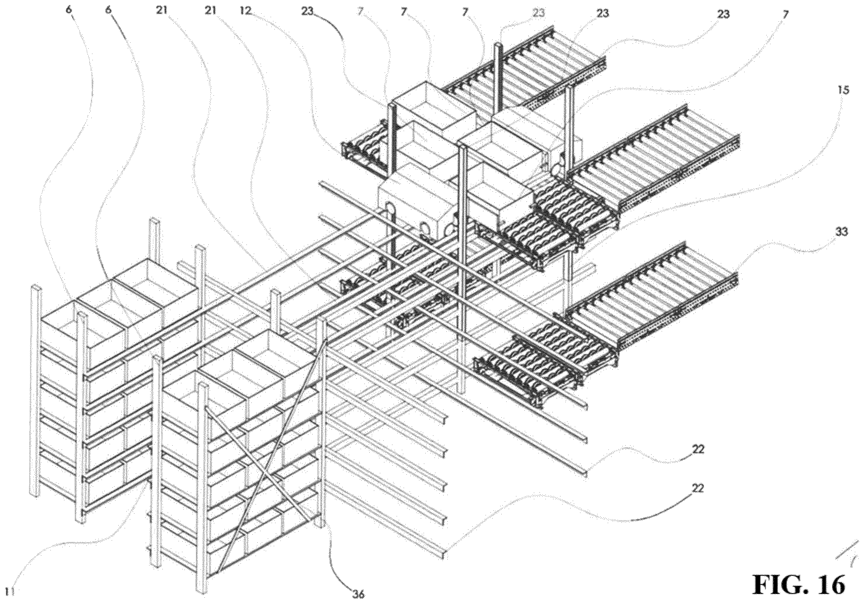

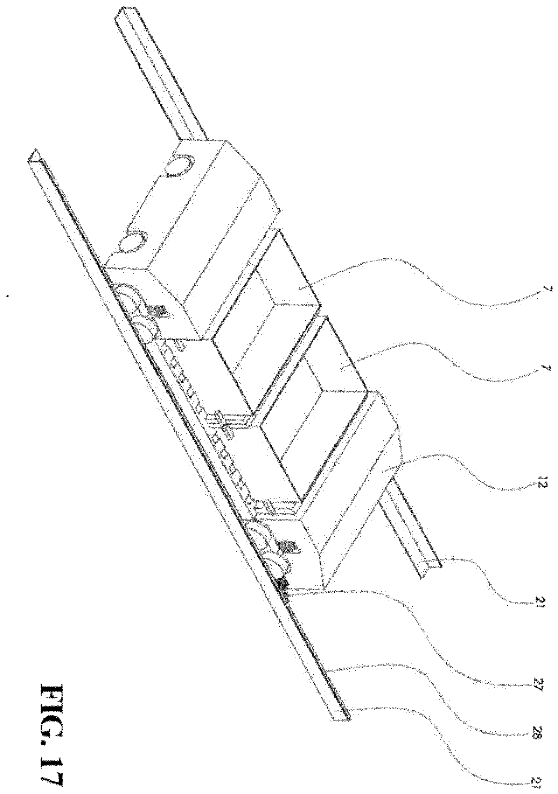

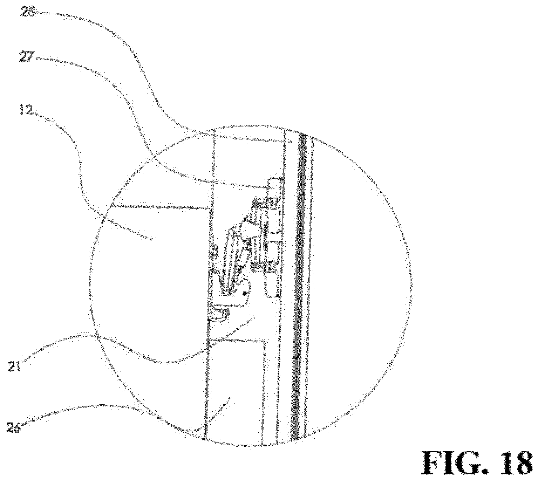

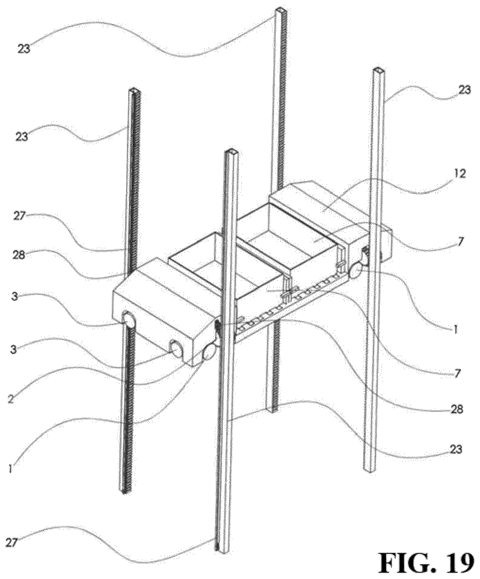

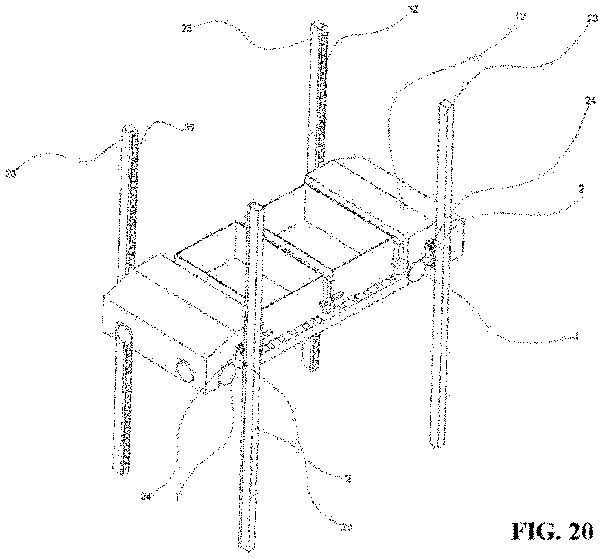

An exemplary embodiment of a storage system according to the invention is shown in the accompanying drawings, in which FIG. 1 shows schematically in an axonometric view an overall view of the storage system, FIG. 2 shows schematically in an axonometric view an overall view of an empty truck according to the technical solution, FIG. 3 shows schematically in an axonometric view an overall view of a truck on which two large crates are attached, FIG. 4 shows schematically in an axonometric view an overall view of a truck on which four small crates are attached in a space delimited with telescopic extension arms, FIG. 5 shows schematically in an axonometric view an overall view of an empty truck with open spaces destined for the drive and the transmissions of particular bogies, Fig. 6 shows schematically in an axonometric view an overall view of the situation of the initial phase of removal of a large crate from a rack structure with the gripping mechanism catching the large crate, Fig. 8 shows schematically in an axonometric view an overall view of a situation where a large crate is already set up on the truck and the truck leaves the original position in which the large crate was stored on the truck, Fig. 9 shows schematically in an axonometric view an overall view of a situation where two large crates are already set up on the truck and are prepared to a vertical motion of the truck, Fig. 10 shows schematically in an axonometric view an overall view of a situation where two large crates are set up on a truck and ready to start the vertical movement of the truck, and a vertical motion of the truck has taken place. and taxi wheel have abandoned longitudinal rails, Fig. 11 shows schematically in axonometric view an overall view of the situation when a truck with two large crates arrives along the longitudinal rails at the crossing point with the intention of subsequent movement of the truck to the side, Fig. 12 shows schematically in axonometric view an overall view of the situation when a truck with two large crates s still on the longitudinal rails but already is on a crossing point with the intention of subsequent movement of the truck to the side, Fig. 13 shows schematically in an axonometric view an overall view of a situation where a truck with two large crates is already by means of a second bogie on transverse rails and starts the motion of the truck to the side, Fig. 14 shows a schematic view of a vertical storage system shaft with trucks in two vertical levels, Fig. 15 shows schematically in an axonometric view one horizontal level of the storage system, which is filled with small , medium and large crates, Fig. 16 shows schematically in axonometric view the principle of unloading crates, Fig. 17 shows schematically in axonometric view the method of feeding the truck while the main bogie travels along the longitudinal rails from the supply rails, Fig. 18 shows a detail of the pressure of the supply segment on the supply rail, Fig. 19 is a schematic axonometric view of a method of feeding a truck while the second bogie is running on vertical rails, and Fig. 20 is a schematic axonometric view of a vertical shaft equipped with riser chains.

### Example of an embodiment of the invention

The storage system according to the invention consists of a rack construction 6 and truck 12, which move on rails mounted on the rack construction 6 and move the handling units within the storage system according to the requirements of the superior control system. The storage system comprises a set of vertical shafts 15 for vertical transfer and rack aisles 11 for horizontal movement, which are formed in the rack construction 6. The storage system according to the invention does not contain any moving elements other than trucks. Only trucks 12 move, handle and change the direction of the moved handling units.

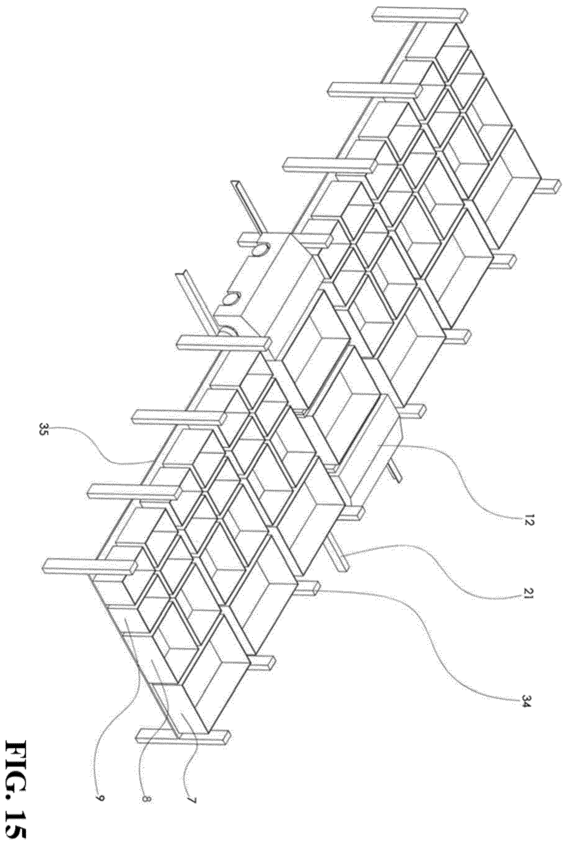

The trucks 12 provide all the necessary operations associated with the transport, handover, storage and retrieval of handling units. The handling unit can be any object capable of independent transfer. In this particular case, the handling unit is a large crate 7, a medium crate 8 and a small crate 9, as shown in Fig. 15.

The invention includes all storage systems where the trucks 12 move at least in the x-axis direction, i.e. along the longitudinal rails 21 and along the vertical rails 23, i.e. in the y-axis direction, and have the features of this technical solution. However, the following specific embodiment of the invention comprises a storage system where the trucks 12 move in the direction of all three axes, i.e. x, y and z.

The truck 12 move autonomously along the rails in the 3 axes, i.e. the longitudinal rails 21 in the x-axis direction, the transverse rails 22 in the z-axis direction and the vertical rails 23 in the y-axis direction. All rails 21, 22 and 23 are mounted on the rack construction 6, so that they do not need any special supporting members.

The trucks 12 ensure the pick-up of the handling unit from the transfer point, which represents the connection to external technologies, and the subsequent transport to the designated position within the storage system and the final storage of the handling unit at the designated rack position. They also provide the opposite transfer, i.e. taking over the handling unit from the designated rack position, subsequent transport to the designated handover position, and finally handing over the handling unit at the handover point from the storage system.

The truck 12 allows positioning in one to three transport positions in the direction of movement in the aisle 11, and this allows the handling unit to be relocated from the rear blocked rack positions and also to transport one to three handling units at a time. Depending on the type or variant of the truck, one truck can have one to three transport positions with corresponding grips, and thus one truck can carry up to three crates. Each truck 12 can move handling units of different sizes without additional modifications or adjustments.

Each truck 12 is equipped with three bogies which are independent of each other. The main bogie 1 serves for fast movement along the longitudinal rails 21 within the rack aisle 11 in the x-axis direction, the second bogie 2 serves for vertical movement within the vertical shaft 15 in the y-axis direction and the third bogie serves for lateral movement between the rack aisles 11 in the direction of the z-axis.

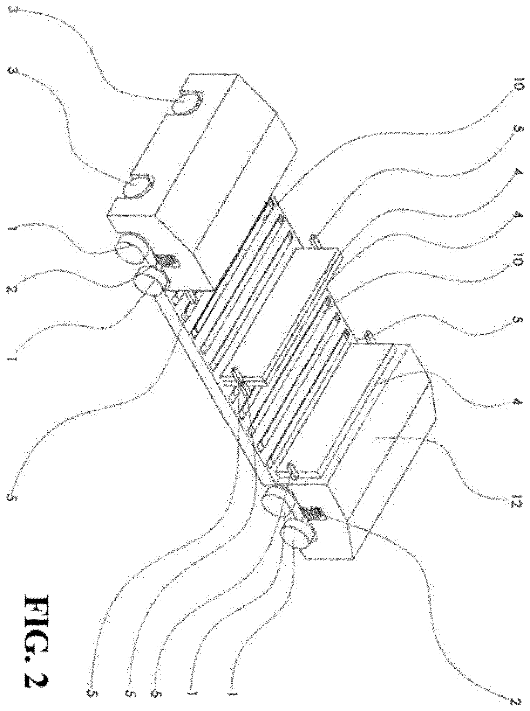

The truck 12 is provided with a gripping mechanism with an adjustable spacing according to the size of the handling unit, which can be a large crate 7, a medium crate 8 or a small crate 9. Each gripping mechanism for storing or unloading the handling unit consists of at least one telescopic extension arm 4 provided with gripping latches 5. This can be seen in FIG. 2. It is also possible to transport smaller sizes of handling units at the transport positions of the truck 12. The truck 12 is designed so that it is possible to use different gripping mechanisms, depending on the type of handling units or goods used and the method of storage. It can be a side, top or bottom grip, it can be located in the back or the front of the handling unit and use different protrusions on the crates. In addition to mechanical gripping mechanisms, vacuum gripping mechanisms can also be used.

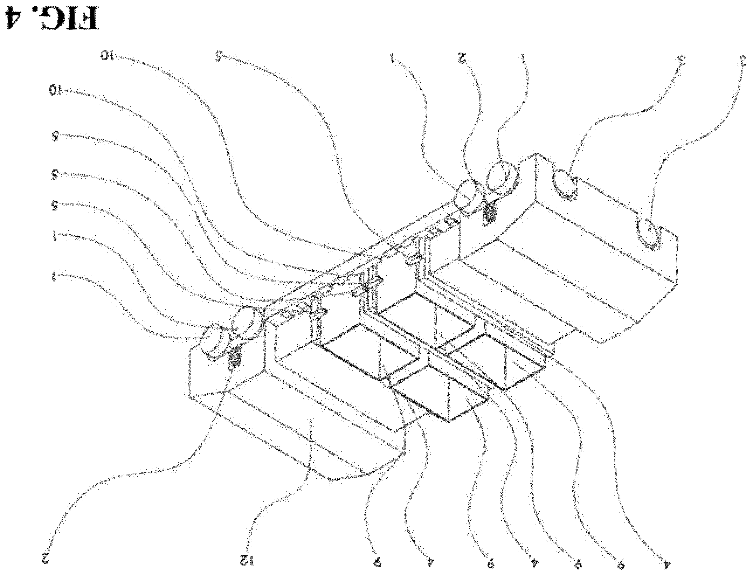

The standard gripping mechanism uses telescopic extension arms 4 with rotatable gripping latches 5 and allows the distance between the left and right gripping arms to be adjusted according to the width of the handling unit, which can be clearly seen in Fig. 4.

The lower part of the transport space of the truck 12 is provided with a self-propelled conveyor 10 to facilitate handling when storing or unloading the loading space of the truck 12, which ensures fast transfer of handling units from and to the truck and transfer technology in one step, so that storing and unloading of crates which take place only in the vertical shaft 15 at the transfer points 33 and which take place or can take place at the same time. The conveyor 10 may alternatively be replaced by a roller conveyor or other known means of conveying goods of said nature. Both crates move in one step at the same time, it is not expected that the delivered crate is transferred to the output conveyor in order to subsequently pick up the crate for storage, thus saving time.

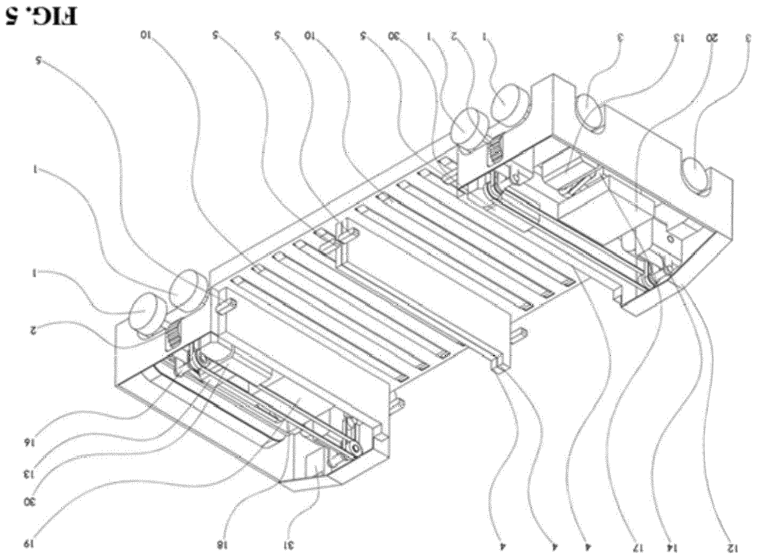

In the front and rear part of the truck 12 there are drives 13, 17, 30, the undercarriage extension mechanism of extension of bogies, the control electronics 20 with the communication module 31 and the power supply of the truck, i.e. batteries 19 or capacitors, as can be seen from Fig. 5.

The truck 12 is equipped with either separate drives 13, 17, 30 for each bogie, or one common drive for all bogies. Standard servo motors or any other motors with adequate power and adequate control can be used as drives.

The truck 12 may be equipped with batteries 19 with sufficient capacity to provide power for movement in sections without a rail power system via power rails 27 on the rack construction and power segments 28 on the individual truck 12. The batteries 19 provide a controlled and safe stop of the truck 12 in the case of a failure energy. The batteries 19 will be located in the covered parts of the truck.

The standard power rail 27 can be of various designs, most often in the form of a copper strip only, so it does not have to be in the shape of typical rails. However, the power rails 27 may or may not be directly connected to the running rails, i.e. to the longitudinal rail 21, the transverse rail 22 or the vertical rail 23, to each or only to some of them. The choice of power supply method depends mainly on the overall size of the storage system and the types of stored handling units and their weight. It is clear that only the battery supply leads to a greater total weight of the truck, so that most often the trucks 12, at least in some sections, will be permanently supplied from the power rails 27.

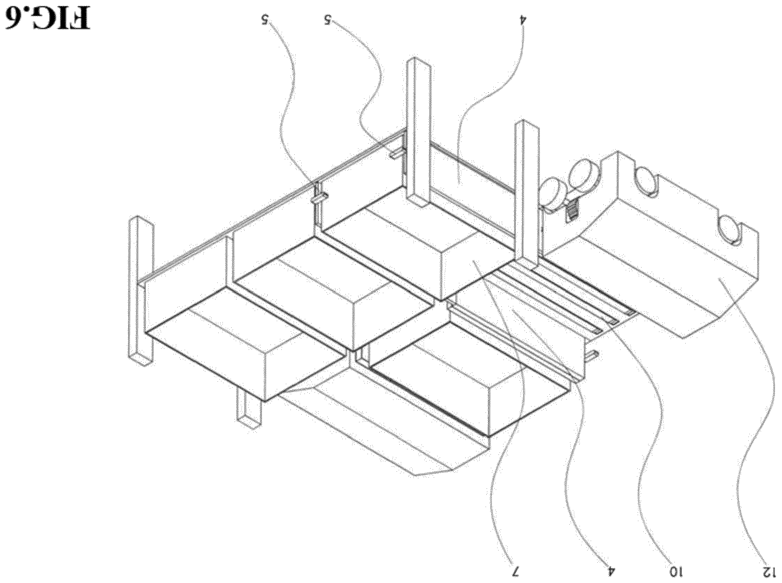

The process of unloading the handling unit from the rack position is started by the arrival of the truck 12 in the unloading position, which allows the telescopic extension arm 4 of the gripping mechanism to extend into the gap between the handling units, as shown in Fig. 6. In the event of minor size of the handling units, the truck 12 readjusts the distance between the telescopic extension arms 4 of the gripping mechanism so as to correspond to the width of the transported handling unit.

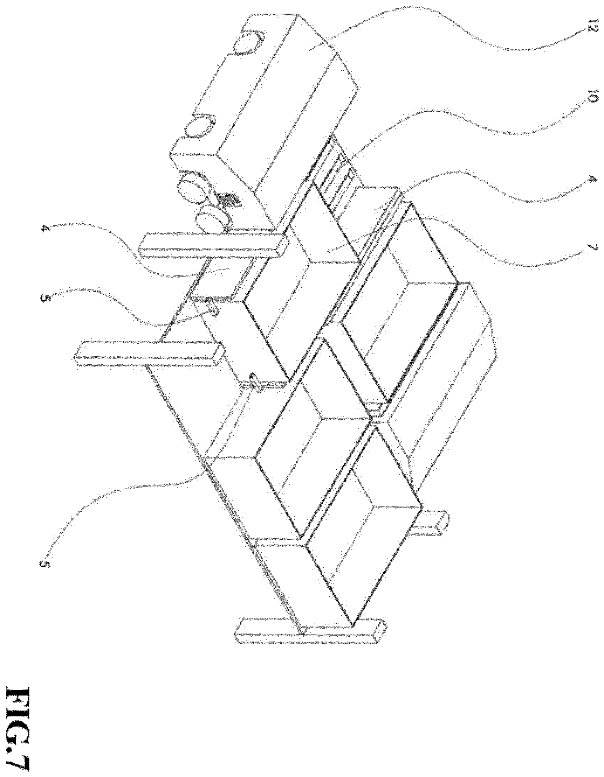

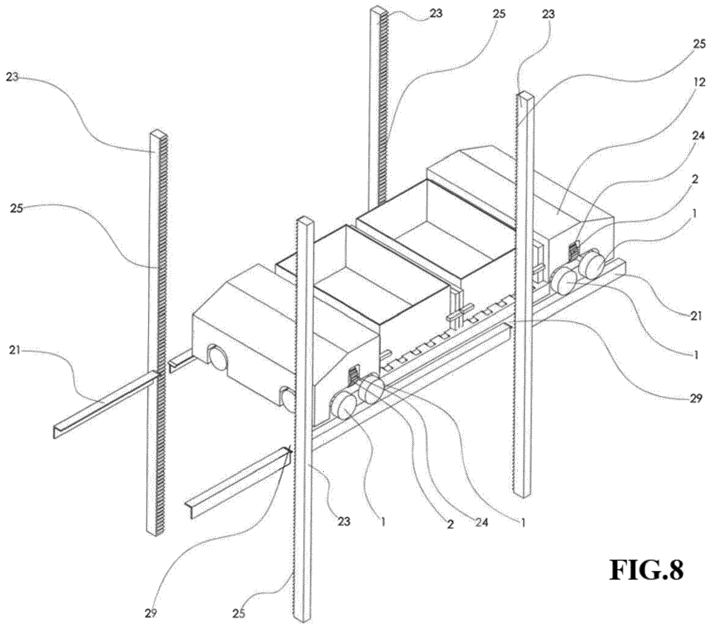

Subsequently, the truck 12 extends the telescopic extension arms 4 of the gripping mechanism into the gap between the handling units and on the telescopic extension arms 4 of the gripping mechanism the gripping latches 5 are lowered in the space behind the specific transport unit. The telescopic extension arms 4 of the gripping mechanism pull the handling unit onto the truck 12, as shown in Fig. 7 and thus the process of unloading the handling unit is completed, the large crate 7 is already set up on the truck 12 and the truck 12 leaves its original position as shown in fig. 8.

The process of storing the handling unit in the racking position is identical to the process of removing from storage the handling unit, except that the individual operations, as described above, are performed in the reverse order.

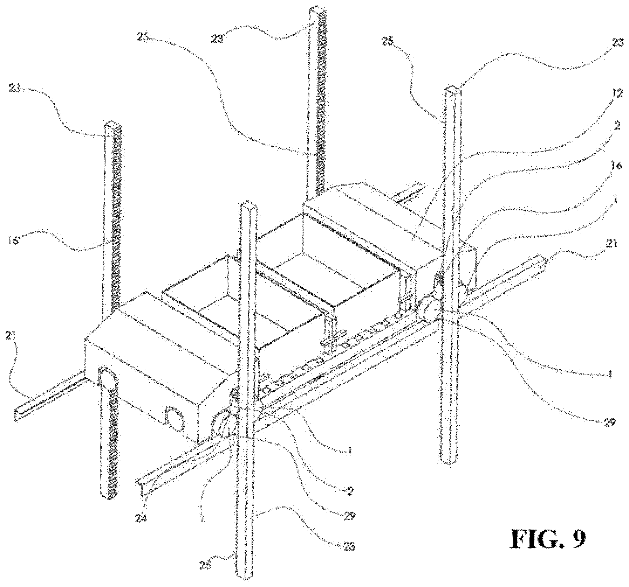

The movement of the truck 12 in the individual axes x, y and z is performed as follows. To move the truck 12 in the x-axis, the truck 12 is equipped with a main bogie 1 with four axles, of which at least two are driven, but all four axles can be driven. The non-driven axles serve to smoothly pass the gaps 29 on the longitudinal rails 21, where these gaps 29 serve to locate uninterrupted vertical rails 23 which ensure the vertical movement of the truck 12 as they rise and fall within the storage system. The longitudinal rails 21 must be interrupted at the intersection with the vertical rails 23, and in order to avoid shocks when overcoming this interruption, the truck 12 must have another pair of axles with traveling wheels 26 to keep the truck still and ensure that the transported goods are not disturbed in the handling units. This is also shown, for example, in FIGS. 8 and 9.

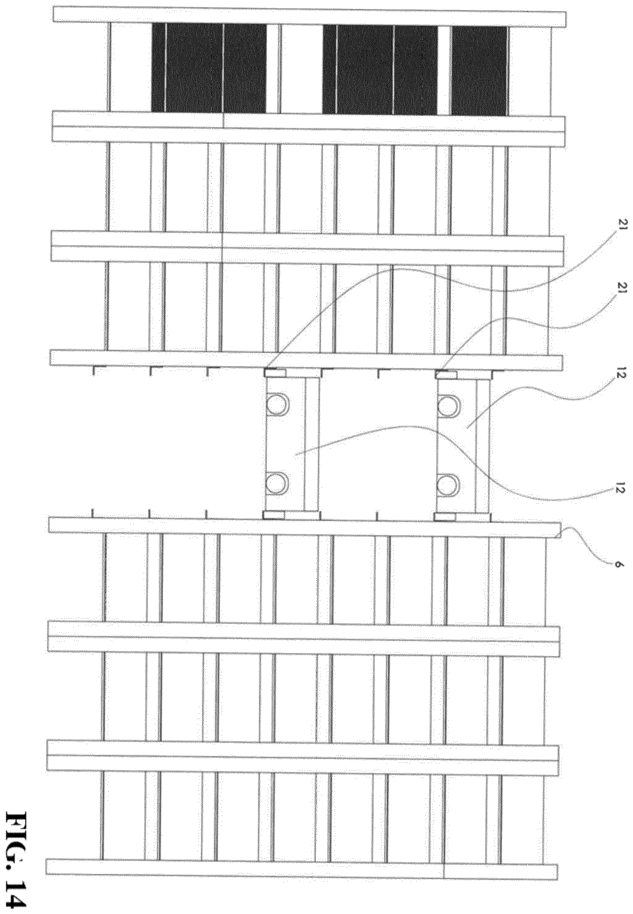

The other bogies are inactive when moving in the x-axis direction and the traveling wheels 26 with the axle are retracted towards the body of the truck 12. The individual bogies are retracted and extended by means of a first extension mechanism 14, a second extension mechanism 16 and a third extension mechanism 18. The movement of the truck 12 in the x-axis runs along longitudinal rails 21 which are fixed to the rack construction at each height level. They will be attached to the rack webs 34 and sometimes to the own rack shelf 35 of the rack construction, as indicated in Fig. 14.

The second bogie 2, which is equipped with gears 24 for rising or falling, serves to move the carriage 12 in the y-axis. The movement in the y-axis takes place at predetermined points in the so-called vertical shafts 15, where the vertical rails 23 are provided with a toothed rack 25 or equivalent, which can be a riser chain 32, along which the gears 24 can also safely rise and fall. The number and location of the vertical shafts 15 is chosen mainly according to the size of the storage system, the type of goods stored in the handling units and the required power of the whole system.

In the case of movement of the carriage 12 in the direction of the y-axis, the main bogie 1 and the third bogie 3 are pushed inwards into the truck body. Depending on the type of storage system, the toothed rack 25 can be of various designs, for example metal or plastic, and it can be a self-supporting toothed racks 25 or those which require additional special support. The support or directly the toothed rack 25 can be attached to the support rail, which facilitates the possibility of replacing part of the toothed rack 25. The toothed rack 25 can also be designed as a self-supporting and anchored directly in only a few places to the storage system. The toothed rack 25 can alternatively be replaced by a riser chain 32.

The movement of the truck 12 in the z-axis serves for its movement between the individual rack aisles 11. A third bogie 3 is intended for this movement. At specified places, namely at begin a end of the rack aisle 11, optionally also in the frame of rack aisle 11, the movement of the truck 12 takes place on the transverse rails 22 and the main bogie 1 and the second bogie 2 can be retracted.

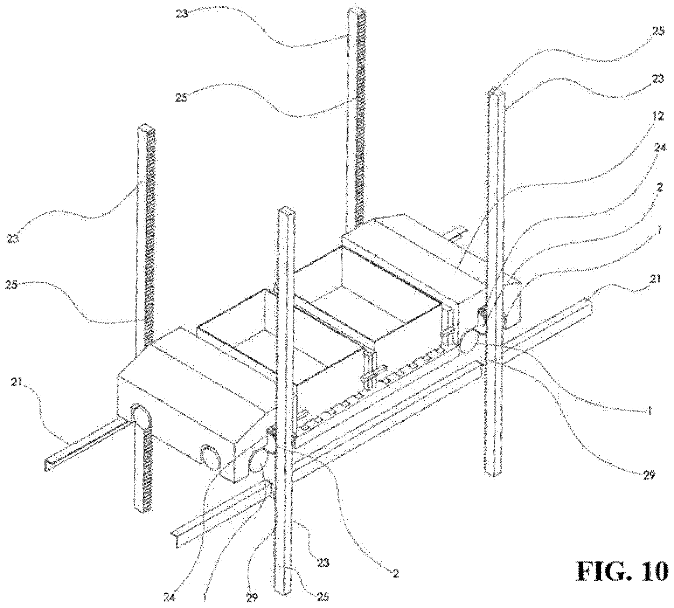

When changing the direction of travel of the truck 12 from the x-axis to the y-axis, or vice versa from the direction of the y-axis to the x-axis, the truck 12 arrives in a vertical shaft 15 in which it is possible to rise or fall, extends the second bogie 2 by means of the second extension mechanism 16 the main bogie 1 and after this retracts by means of the first extension mechanism 14 the main bogie 1. The initial position of this movement is shown in Fig. 9. The truck 12 moves through the toothed rack 25 in the y-axis direction, i.e. up or down, as indicated in Fig. 10. In the case of change of the direction of movement of the truck 12 from the direction of movement in the y-axis to the direction of movement in the direction of the x-axis, the sequence of operations is the same, but in the reverse order.

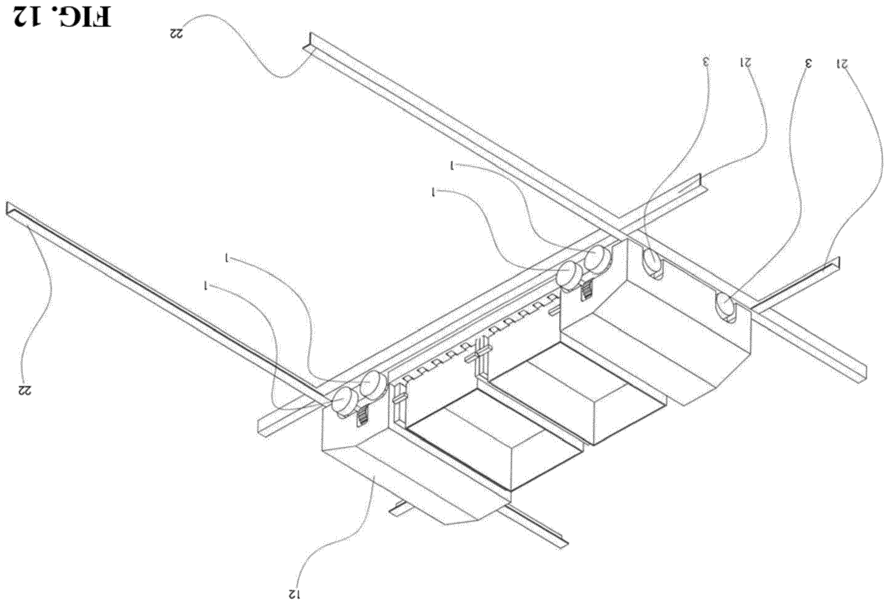

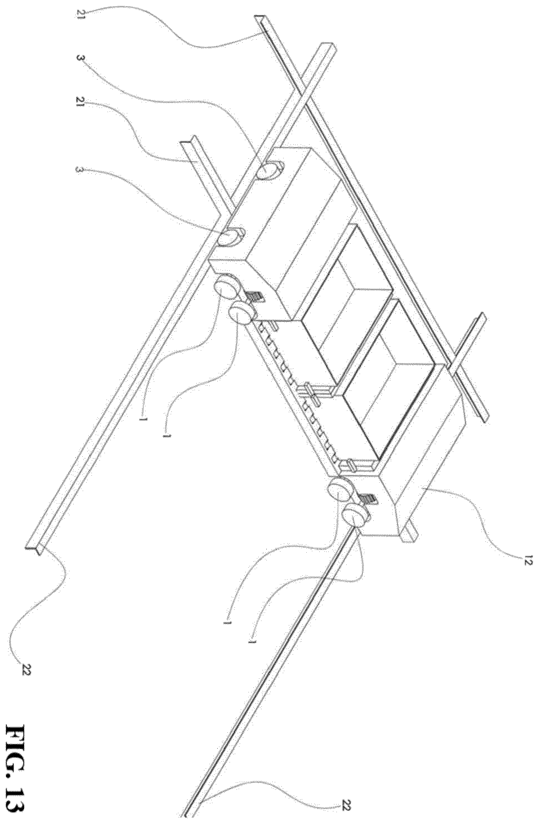

When changing the direction of travel of the truck 12 from the x-axis to the z-axis, or vice versa from the direction of the z-axis to the x-axis, the carriage 12 arrives in the space with transverse rails 22 along which it is possible to move between aisles, extends by means of the third extension mechanism 18 the third bogie. The main bogie 1 may remain extended. The initial position of this movement is shown in Fig. 12. The truck 12 moves by means of the third bogie 3 in the z-axis direction, i.e. horizontally between the aisles, as indicated in Fig. 13. In the event of change of the direction of the movement of the truck 12 from the direction of the movement in the z-axis to the direction of movement in the x-axis the the sequence of operations is the same, but in reverse order.

The rack construction is designed so that it is possible to use standard or slightly modified existing rack systems. These are standard lattice racks with crossbars on which handling units will be stored. It is necessary to attach running rails, such as longitudinal rails 21 and vertical rails 23, to such an existing rack construction, and if the storage system also provides lateral travel, also transverse rails 22. If the power rails 27 are used for the drive, it will be necessary to equip the storage system with power rails 27, including any supports for their proper fastening.

Within the storage system according to the technical solution, it is possible to store one to three handling units of the maximum size for which the trucks are designed in a single rack construction.

Handling units can be stored in one row of rack storage positions, where the depth of the rack construction corresponds to the size of one handling unit of the maximum size. The second option is to store handling units in two rows of rack storage positions one after another, i.e. to store two handling units one after another. Another possibility is to store handling units in three rows of rack storage positions one after another, i.e. to store three handling units in one after another

It is also possible to combine the above options, where it is possible to combine different rack depths within a single storage system, depending on the required storage system performance, space possibilities and possibly other requirements. It is also not necessary to have only one type of racks in the entire storage system.

Within the frame of the storage system, it is also possible to store handling units or goods of various sizes, to the extent given by the possibilities of the telescopic extension arms 4 and the gripping mechanisms of the truck 12.

The connection points, which are located in the vertical shafts 15, serve to connect the storage system to external downstream technologies. The vertical location of the transfer point 33 is not limited to the height position of the particular floors of rack construction and may be located anywhere, i.e. also between the particular floors of this construction. In the individual vertical shafts 15 the location of the transfer points 33 may be different so that these ones need not be located on the same places uniformly in the entire storage system.The number of transfer points 33 within one vertical shaft 15 is limited only in terms of construction in order to ensure the passage of the handling units. There may be no transfer point in any of the vertical shafts 15.

The rack construction of the storage system consists of rack webs 34, rack shelves 35 and reinforcing rods 36 of individual racks and is further provided with rail systems for moving the truck in all directions and possibly also supply systems for ensuring the movement of the trucks. The rack construction of the storage system is provided on the one hand with vertical shafts 15 for vertical movement of the truck 12 and on the other hand with rack aisles 11 for lateral movement of the trucks 12. The numbers a locations of the vertical shafts 15 may be arbitrarily voted according to concrete circumstances and needs of the storage system.

The individual side and vertical shafts can be placed both at the beginning and end of the aisle and within the aisle. The shafts can be designed for both two-way and one-way operation. The vertical shafts follow the shafts for lateral movement, if they occur in the system, due to the connection of conveyor technologies to the transfer points. The vertical shafts must be located at the end of the system so that the conveyors can be brought to the transfer points.

### Industrial applicability

The invention can be used in the frame of construction of storage systems, in particular automated storage systems, for the storage of handling units, which can be, for example, a crate or a carton, and also for their handling in all fields of technology.

### List of the reference numerals

- 1 -: main bogie
- 2 -: second bogie
- 3 -: third bogie
- 4 -: telescopic extension arm
- 5 -: gripping latch
- 6 -: rack construction
- 7 -: large crate
- 8 -: medium crate
- 9 -: small crate
- 10 -: conveyor
- 11 -: rack aisle
- 12 -: truck
- 13 -: first drive
- 14 -: first extension mechanism
- 15 -: vertical shaft
- 16 -: second extension mecanism
- 17 -: third drive
- 18 -: third extension mechanism
- 19 -: batteries
- 20 -: control electronics
- 21 -: longitudinal rail
- 22 -: transverse rail
- 23 -: vertical rail
- 24 -: gear
- 25 -: toothed rack
- 26 -: traveling wheel
- 27 -: power rail
- 28 -: power segment
- 29 -: gap
- 30 -: second drive
- 31 -: communication modul
- 31 -: riser chain
- 33 -: transfer point
- 34 -: rack web
- 35 -: rack shelf
- 36 -: reinforcing rod

## Claims

1. A storage system, **characterized in that** it is provided with at least one rack construction (6), which is provided with at least one vertical shaft (15), in which vertical toothed rack (25) or riser chains (32) are fixed, and at least one rack aisle (11) in which the horizontal longitudinal rails (21) are fixed, as well as at least one truck (12) with a main bogie (1) for horizontal movement and a second bogie (2) with gears (24) for vertical movement of the truck (12).

2. A storage system according to claim 1, **characterized in that** the rack construction (6) is provided on at least one side with transverse rails (22) for the third bogie (3) for the transverse horizontal movement of the truck (12).

3. A storage system according to Claim 1, **characterized in that** a transfer point (33) adjoins the vertical shaft (15).

4. A truck for a storage system according to claim 1, **characterized in that** it is provided with a storage surface provided with at least one gripping mechanism, a main bogie (1) for horizontal movement of the truck and a second bogie (2) for vertical movement of the truck, whereas the second bogie (2) is provided with gears (24), the mutually independent bogies (1,2) being provided with a first drive (13) and a second drive (17), and the truck being equipped with control electronics (20), a power supply system and a communication module (31).

5. A truck for a storage system according to claim 4, **characterized in that** it is provided with a second bogie (2) for lateral movement of the truck (12).

6. A truck for storage system according to claims 4 and 5, **characterized in that** at least one of the bogies (1, 2, 3) is provided with a power segment (28) with a pressure device.

7. A truck for a storage system according to claim 4, **characterized in that** the gripping mechanism is formed by at least one telescopic extension arm (4) which is provided with a gripping latch (5).

8. A truck for a storage system according to claim 4, **characterized in that** the main bogie (1) is formed by four axles, at least two of which are driven.

9. A truck for a storage system according to claim 4, **characterized in that** the storage surface of the truck is provided with its own conveyor (10).

10. A truck for a storage system according to claim 4, **characterized in that** the second bogie (2) is provided with gears (24) which engage in the toothed rack (25) of the vertical rail (23) or in the riser chain (32).

11. A rack construction of the storage system according to claim 1, **characterized in that** it consists of interconnected rack webs (34) and rack shelves (35), toothed racks (25) or riser chains (32) being fastened in at least one vertical shaft (15), which pass through gaps (29) in horizontal longitudinal rails (21) which are accommodated in at least one rack aisle (11).

12. A rack structure of the storage system according to claim 11, **characterized in that** transverse rails (22) are mounted on at least one side of the rack construction.

13. A rack construction of the storage system according to Claim 11, **characterized in that** parallel to the toothed racks (25) or riser chains (32) are in a vertical shaft (15) and parallel to the horizontal longitudinal rails (21) attached power rails (27) in the rack aisles (11).

14. A rack construction of the storage system according to claim 11, **characterized in that** the rack shelves (35) are corrugated or are made of individual mandrels fixed to the rack construction.

## Amended claims

### Amended claims in accordance with Rule 137(2) EPC.

1. A storage system with at least one rack construction (6), which is provided with at least one vertical shaft (15), in which vertical toothed rack (25) or riser chains (32) are fixed, and at least one rack aisle (11) in which the horizontal longitudinal rails (21) are fixed, as well as at least one truck (12) with a main bogie (1) for horizontal movement and a second bogie (2) with gears (24) for vertical movement of the truck (12), **characterized in that** the rack construction (6) is provided on at least one side with transverse rails (22) for the third bogie (3) for the transverse horizontal movement of the truck (12), and a transfer point (33) adjoins the vertical shaft (15).

2. A rack construction of the storage system according to claim 1, which consists of interconnected rack webs (34) and rack shelves (35) wherein the toothed racks (25) or riser chains (32) are fastened in at least one vertical shaft (15), and which pass through gaps (29) in horizontal longitudinal rails (21) which are accommodated in at least one rack aisle (11), **characterized in that** transverse rails (22) are fixed on at least one side of the rack construction.
